(19) Europäisches Patentamt
European Patent Office
Office européen des brevets

(11) EP 4 213 245 A1

# (12) EUROPEAN PATENT APPLICATION

(43) Date of publication:
**19.07.2023 Bulletin 2023/29**

(21) Application number: **23151148.6**

(22) Date of filing: **11.01.2023**

(51) International Patent Classification (IPC):
***H01M 4/36*** *(2006.01)* ***H01M 10/052*** *(2010.01)*
***H01M 4/02*** *(2006.01)* ***H01M 4/04*** *(2006.01)*
***H01M 4/13*** *(2010.01)* ***H01M 4/139*** *(2010.01)*
***H01M 4/66*** *(2006.01)* ***H01M 10/0525*** *(2010.01)*
***H01M 50/46*** *(2021.01)* ***H01M 4/133*** *(2010.01)*
***H01M 4/1393*** *(2010.01)*

(52) Cooperative Patent Classification (CPC):
**H01M 10/052; H01M 4/04; H01M 4/13; H01M 4/139; H01M 4/362; H01M 4/667; H01M 10/0525; H01M 50/461;** H01M 4/133; H01M 4/1393; H01M 2004/021; H01M 2004/027

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.01.2022 KR 20220006146**

(71) Applicant: **Samsung SDI Co., Ltd.**
**Yongin-si, Gyeonggi-do 17084 (KR)**

(72) Inventor: **KIMURA, Fumiko**
**17084 Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

## (54) NEGATIVE ELECTRODE FOR RECHARGEABLE LITHIUM BATTERY AND RECHARGEABLE LITHIUM BATTERY INCLUDING SAME

(57) Disclosed is a negative electrode for a rechargeable lithium and a rechargeable lithium battery, and the negative electrode includes a current collector and a negative active material layer positioned on the current collector, wherein the negative active material layer includes a plurality of holes at a hole density of 90 pt/$mm^2$ or more.

EP 4 213 245 A1

## Description

## BACKGROUND OF THE INVENTION

### (a) Field of the Invention

It relates to a negative electrode for a rechargeable lithium battery and a rechargeable lithium battery including the same.

### (b) Description of the Related Art

Recently, the rapid supplement of electronic devices such as mobile phones, laptop computers, and electric vehicles, using batteries requires surprising increases in demands for rechargeable batteries with relatively high capacity and lighter weight. Particularly, a rechargeable lithium battery has recently drawn attention as a driving power source for portable devices, as it has lighter weight and high energy density.

A rechargeable lithium battery includes a positive electrode and a negative electrode which may include an active material being capable of intercalating and deintercalating lithium ions, and an electrolyte, and generates electrical energy due to an oxidation and reduction reaction when lithium ions are intercalated and deintercalated into the positive electrode and the negative electrode.

As for a positive active material of a rechargeable lithium battery, transition metal compounds such as lithium cobalt oxides, lithium nickel oxides, and lithium manganese oxide are mainly used. As the negative active material, a crystalline carbonaceous material such as natural graphite or artificial graphite, or an amorphous carbonaceous material, is used.

The thick and high-density layer formation is essential for increasing energy to the rechargeable lithium battery. Furthermore, it is necessary to inhibit swelling and shape deformation due to contraction and expansion during charging and discharging in order to solve rapid deterioration of the cycle-life characteristics.

For this purpose, attempts have been made to study a structure of the battery having an adhesion function to the interface between the electrode and the separator. However, an adhesive polymer for imparting the adhesion is inserted into the micropores on the surface of the active material layer, thereby reducing lithium ion paths to increase resistance.

## SUMMARY OF THE INVENTION

The invention is defined by the appended claims.

One embodiment provides a negative electrode for a rechargeable lithium battery exhibiting high energy density and excellent high-rate charge and discharge characteristics.

Another embodiment provides a rechargeable lithium battery including the negative electrode.

One embodiment provides a negative electrode for a rechargeable lithium battery including a current collector; and a negative active material layer positioned on the current collector, and the negative active material layer including a plurality of holes at a hole density of 90 pt/mm$^2$ or more.

The hole density may be 90 pt/mm$^2$ to 625 pt/mm$^2$.

The hole may have a depth of 5 μm to 40 μm, and according to one embodiment, the hole may have a depth of 5 μm to 20 μm.

The negative active material layer may include the holes at a pitch of 100 μm or less, or 40 μm to 100 μm.

The negative electrode may further include an adhesive layer including a plurality of holes on the negative active material layer.

The adhesive layer may have a thickness of 1 μm to 5 μm.

The adhesive layer may include a vinyl-based or an acryl-based polymer, polyvinyl alcohol, a fluorine-based polymer, or a combination thereof.

The negative electrode has a loading level of 15 mg/cm$^2$ or more.

According to another embodiment, a rechargeable lithium battery includes a negative electrode, a positive electrode, and an electrolyte.

The negative electrode according to one embodiment may exhibit high energy density and excellent cycle-life characteristics.

## BRIEF DESCRIPTION OF THE DRAWINGS

FIG. 1 is a drawing showing a structure of the negative electrode for a rechargeable lithium battery.

FIG. 2 is an exploded perspective view of a rechargeable lithium battery according to an embodiment of the present invention.

## DETAILED DESCRIPTION OF THE INVENTION

Hereinafter, embodiments of the present invention are described in detail. However, these embodiments are merely examples, the present invention is not limited thereto, and the present invention is defined by the scope of claims.

A term used in the specification is used to explain an exemplary embodiment, but it is not intended to limited to the present invention. Expressions in the singular include a plurality of expressions unless the context clearly dictates otherwise.

"Layer" includes a shape totally formed on the entire surface or a shape formed on partially surface, when viewed as a plane view.

"Thickness", for example, may be measured via a photograph using an optical microscope, such as scanning electron microscope and the like.

A negative electrode for a rechargeable lithium battery includes a current collector and a negative active material layer positioned on the current collector, wherein the negative active material layer includes a plurality of holes.

The negative active material layer includes the holes at a hole density of 90 pt/mm$^2$ or more, and according to one embodiment, at a hole density of 90 pt/mm$^2$ to 625 pt/mm$^2$.

In the specification, "pt" indicates numbers. That is, the hole may be formed on the negative active material layer at 90 holes or more per unit area of mm$^2$, may be 90 holes to 625 holes, may be 90 holes to 400 holes, or may be 90 holes to about 300 holes. Furthermore, 100 holes to 300 holes may be formed.

When the hole is formed on the negative active material layer at the hole density, charging and discharging speed may be improved without the separation of the negative active material layer from the current collector during charging and discharging, so that the rapid charge and discharge characteristics is improved.

If the hole density is less than 90 pt/mm$^2$, increases in the charge and discharge speed is insignificant, so it is not suitable.

When the negative electrode 20 according to one embodiment is illustrated, referring to FIG. 1 schematically showing it, a plurality of holes 7 are formed on the negative active material layers 3a and 3b, and such holes 7 are formed at 90 holes or more per unit area of mm$^2$, and according to one embodiment, may be 90 holes to 625 holes, 90 holes to 400 holes, 90 holes to 300 holes, or 100 holes to 300 holes.

A depth of the hole formed in the negative active material layer may be 5 μm to 40 μm, or 5 μm to 20 μm. The depth of the hole is indicated as h in FIG. 1, and in the one embodiment, the depth of the holes indicates a distance from a surface of the negative active material layer to a direction of a current collector 5.

The depth of the hole within the range may effectively suppress the deterioration of the cycle-life characteristics occurring during rapid charge and discharge.

Generally, due to the overvoltage at rapid charge and discharge, lithium may not intercalate into the active materials, and thus, it may be deposited (plated) on the surface of the active material layer. As a result, the side-reaction between the partially deposited lithium and the electrolyte may occur to inactivate lithium ions, thereby deteriorating the cycle-life characteristics.

As in the one embodiment, when the holes are formed on the negative active material layer at the depth within the range, lithium may readily intercalated into the inside of the active material layer via the holes, and thus, the charge and discharge reaction may be totally and uniformly performed in the negative active material layer, thereby more effectively improving the rapid charge and discharge characteristics.

In one embodiment, the depth of the holes is not a modified value depending on the thickness of the active material layer, so that it is desired that the holes are formed at a depth of 5 μm to 40 μm, even if the thickness of the active material layer is changed. In addition, the minimum depth of the holes is 5 μm, so that even though the thickness of the active material layer is reduced, the thickness of the active material layer may not be thinner than 5 μm in order to prevent penetration of the active material layer. That is, in one embodiment, the hole does not penetrate to the active material layer.

In one embodiment, the negative active material layer may include the holes at a pitch of 100 μm or less. The pitch means a distance between center points of the holes located at the closest distance. Thus, the pitch does not depend on a diameter of the hole and is different from a length between unprocessed parts which depends on the size of the hole. According to another embodiment, the pitch may be 40 μm to 100 μm, 40 μm to 80 μm, or 40 μm to 75 μm.

When the pitch is within the range, the cycle-life characteristics at the rapid charge may be further improved. If the pitch is larger than 100 μm, the effects for improving the cycle-life characteristics is not sufficient, so that the practical application may be difficult.

The shape of the holes may be any shape such as a circle, an oval, or a quadrangle, and the like, in the flat plane, and a column, a cone, and the like, in a side plane, and is not limited thereto. According to one embodiment, the shape of the hole may be a circular cone shape in a side plane, a concave cone shape in which an end is hollow, or a circular cone shape in which an end is bluntly cut. According to another embodiment, the shape of the hole may be concave in which the end is hollow, and the bottom plane may be positioned on the surface of the active material layer and the hollow end may be positioned in the direction of the current collector, such as an ice cream cone.

The hole may be arranged regularly or irregularly, and it is not limited to the arrangement.

The hole may have an average diameter of 1 μm to 35 μm, or 3 μm to 35 μm. When the average diameter of the holes is within the range, the cycle-life characteristics at the rapid charge may be further improved, while the battery capacity and the strength of the active material layer may be maintained. The average diameter may be an average diameter D50, and in the specification, when a definition is not otherwise provided, such a particle diameter (D5) indicates a diameter of particles where a cumulative volume is about 50 volume% in a particle distribution.

The average diameter (D50) may be measured by a method well known to those skilled in the art, for example, by a particle size analyzer, or also by a transmission electron microscopic image or a scanning electron microscopic image. Alternatively, a dynamic light-scattering measurement device is used to perform a data analysis, and the number of particles is counted for each particle size range. From this, the average particle diameter (D50) value may be easily obtained through a calculation.

In one embodiment, the negative electrode may further include an adhesive layer including a plurality of holes on the negative active material layer.

When the adhesive layer is further included, the volume expansion and contraction of the negative active material layer occurring during charging and discharging may be further improved.

As described above, the active material layer and the adhesive layer may include a plurality of holes so that the intercalation or deintercalation of lithium ions may effectively occur, without deterioration of energy density.

Thus, the negative electrode according to one embodiment may exhibit improvement of intercalation and deintercalation of lithium ions due to the formation of holes, uniform charging and discharging, and inhibition of the shape of the electrode and improvement of the swelling characteristic due to the adhesion layer.

A thickness of the adhesive layer may be 1 μm to 5 μm, or according to one embodiment, 1 μm to 2 μm. When the thickness of the adhesive layer satisfies the range, the volume expansion and contraction of the negative active material layer due to the formation of the adhesive layer may be further inhibited.

The adhesive layer may include a vinyl-based or an acryl-based polymer, polyvinyl alcohol, a fluorine-based polymer, or a combination thereof.

The vinyl-based or acryl-based polymer, for example, may be poly(meth)acrylic acid, poly(meth)acrylate, polymethyl(meth)acrylate, polyacrylonitrile, an acrylonitrile-styrene-butadiene copolymer, or a combination thereof. The "(meth)" may indicate to include or not include a methyl group. For example, poly(meth)acrylic acid indicates polymethacrylic acid or polyacrylic acid.

The fluorine-based polymer may be a vinylidene fluoride homopolymer, for example, polyvinylidene-fluoride, a polyvinylidene fluoride-hexafluoropropylene copolymer, a polyvinylidene fluoride-trichloroethylene copolymer, a polyvinylidene fluoride-tetrafluoroethylene copolymer, a polyvinylidene fluoride-trifluoroethylene copolymer, a polyvinylidene fluoride-trifluorochloroethylene copolymer, a polyvinylidene fluoride-ethylene copolymer, or a combination thereof.

In one embodiment, the negative active material may be a material capable of reversibly intercalating/deintercalating lithium ions, lithium metal, an alloy of lithium metal, a material capable of doping and dedoping lithium, or a transition metal oxide The material that reversibly intercalates/deintercalates lithium ions may be a carbon material that may be any generally-used carbon-based negative active material used in a rechargeable lithium ion battery, and examples thereof may be crystalline carbon, amorphous carbon, or a combination thereof. The example of the carbon material may be crystalline carbon, amorphous carbon, or a mixture thereof. The crystalline carbon may be graphite such as unspecified shape, sheet, flake, spherical or fiber shaped natural graphite or artificial graphite, and the amorphous carbon may be soft carbon, hard carbon, mesophase pitch carbide, sintered cokes, and the like. The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, $SiO_x$ ($0 < x < 2$), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si), a Si-carbon composite, Sn, $SnO_2$, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, and not Sn), a Sn-carbon composite, and the like. At least one of these materials may be mixed with $SiO_2$. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The transition elements oxide may be a lithium titanium oxide.

The Si-C composite may include silicon particles and a crystalline carbon. The silicon particle may have an average particle diameter D50 of about 10 nm to about 200 nm. The Si-C composite may further include an amorphous carbon layer formed on at least a portion. In the specification, when a definition is not otherwise provided, such a particle diameter (D50) indicates an average particle diameter (D50) where a cumulative volume is about 50 volume% in a particle distribution.

The average particle size (D50) may be measured by a method well known to those skilled in the art, for example, by a particle size analyzer, or also by a transmission electron microscopic image or a scanning electron microscopic image. Alternatively, a dynamic light-scattering measurement device is used to perform a data analysis, and the number of particles is counted for each particle size range. From this, the average particle diameter (D50) value may be easily obtained through a calculation.

In one embodiment, the negative active material may also include the silicon-based negative active material and the carbon-based negative active material. When the negative active material includes the silicon-based negative active material and the carbon-based negative active material, the mixing ratio of the silicon-based negative active material and the carbon-based negative active material may be about 1:99 to about 50:50 by weight ratio. More particularly, the mixing ratio of the silicon-based negative active material and the carbon-based negative active material may be also about 5:95 to 20:80 by weight ratio.

In the negative active material layer, an amount of the negative active material may be about 90 wt% to about 98 wt% or about 92 wt% to about 97 wt% based on the negative active material layer.

The negative active material layer may further include a conductive material. When the negative active material layer further includes a binder, the negative active material layer includes about 90 wt% to about 98 wt% of the negative active material, about 1 wt% to about 5 wt% of the binder, and about 1 wt% to about 5 wt% of the conductive material.

The binder improves binding properties of negative active material particles with one another and with a current collector. The binder may be a non-aqueous binder, an aqueous binder, or a combination thereof.

The non-aqueous binder may be an ethylene propylene copolymer, polyacrylonitrile, polystyrene, polyvinylchloride, carboxylated polyvinylchloride, polyvinylfluoride, polyurethane, polytetrafluoroethylene, polyvinylidene fluoride, polyethylene, polypropylene, polyamide imide, polyimide, or a combination thereof.

The aqueous binder may be a styrene-butadiene rubber, an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polypropylene, polyepichlorohydrin, polyphosphazene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the aqueous binder is used as a negative electrode binder, a cellulose-based compound may be further used to provide viscosity as a thickener. The cellulose-based compound includes one or more of carboxymethyl cellulose, hydroxypropyl methylcellulose, methyl cellulose, or alkali metal salts thereof. The alkali metal may be Na, K, or Li. The thickener may be included in an amount of about 0.1 parts by weight to about 3 parts by weight based on 100 parts by weight of the negative active material.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

The negative electrode may have an active mass density of about 1.5 g/cm$^3$ or more, for example, may have an active mass density of about 1.5 g/ cm$^3$ to 2.0 g/ cm$^3$.

Furthermore, the negative electrode may have a loading level of about 15 mg/cm$^2$ or more, preferably 18 mg/cm$^2$ or more. The loading level of about 15 mg/cm$^2$ or more of the negative electrode renders greater improvement in the formation of holes at the hole density according to one embodiment. That, the effect by forming holes may be more effectively obtained from the negative electrode with such high loading level. The loading level of the negative electrode of about 15 mg/cm$^2$ or more is appropriate, so that it is not necessary to limit the upper limit, but the loading level may be, for example about 18 mg/cm$^2$ to about 36 mg/cm$^2$.

A thickness of the negative active material layer may be about 100 $\mu$m or more and about 200 $\mu$m or less. The thickness of the negative active material layer indicates a thickness of the one side. When the thickness of the negative active material layer is within the range, suitable battery capacity may be exhibited.

The negative electrode according to one embodiment may be produced by preparing a negative active material layer on the current collector and forming holes. Alternatively, the negative electrode may also be produced by preparing

an adhesive layer on the negative active material layer and then forming holes.

The hole formation process may be any techniques, as long as the holes may be formed, and for example, needle punching, a laser, and the like.

The negative active material layer preparation may be performed by a general technique including coating a negative active material layer composition including a negative active material, a binder, optionally, a conductive material, and a solvent on a current collector, and drying and pressurizing. The solvent may be N-methyl pyrrolidone, water, or a combination thereof, and when binder is used as the aqueous binder, water may be used as the solvent.

The adhesive layer preparation may be a general technique including coating an adhesive layer composition including a vinyl-based or an acryl-based polymer, polyvinyl alcohol, a fluorine-based polymer, or a combination thereof, and a solvent, on the negative active material layer, and drying and pressurizing.

The solvent may be water.

Another embodiment provides a rechargeable lithium battery including the negative electrode, a positive electrode, and an electrolyte.

The positive electrode may include a current collector and a positive active material layer formed on the current collector.

The positive electrode active material may include lithiated intercalation compounds that reversibly intercalate and deintercalate lithium ions. Specifically, one or more composite oxides of a metal selected from cobalt, manganese, nickel, and a combination thereof, and lithium may be used. More specifically, the compounds represented by one of the following chemical formulae may be used. $Li_aA_{1-b}X_bD_2$ ($0.90 \leq a \leq 1.8$, $0 \leq b \leq 0.5$); $Li_aA_{1-b}X_bO_{2-c}O_c$ ($0.90 \leq a \leq 1.8$, $0 \leq b \leq 0.5$, $0 \leq c \leq 0.05$); $Li_aE_{1-b}X_bO_{2-c}D_c$ ($0.90 \leq a \leq 1.8$, $0 \leq b \leq 0.5$, $0 \leq c \leq 0.05$); $Li_aE_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_\alpha$ ($0.90 \leq a \leq 1.8$, $0 \leq b \leq 0.5$, $0 \leq c \leq 0.5$, $0 < \alpha \leq 2$); $Li_aNi_{1-b-c}Co_bX_cO_{2-a}T_\alpha$ ($0.90 \leq a \leq 1.8$, $0 \leq b \leq 0.5$, $0 \leq c \leq 0.5$, $0 < \alpha < 2$); $Li_aNi_{1-b-c}Co_bX_cO_{2-\alpha}T_2$ ($0.90 \leq a \leq 1.8$, $0 \leq b \leq 0.5$, $0 \leq c \leq 0.5$, $0 < \alpha < 2$); $Li_aNi_{1-b-c}Mn_bX_cD_\alpha$ ($0.90 \leq a \leq 1.8$, $0 \leq b \leq 0.5$, $0 \leq c \leq 0.5$, $0 < \alpha \leq 2$); $Li_aNi_{1-b-c}Mn_bX_cO_{2-a}T_\alpha$ ($0.90 \leq a \leq 1.8$, $0 \leq b \leq 0.5$, $0 \leq c \leq 0.05$, $0 < \alpha < 2$); $Li_aNi_{1-b-c}Mn_bX_cO_{2-\alpha}T_2$ ($0.90 \leq a \leq 1.8$, $0 \leq b \leq 0.5$, $0 \leq c \leq 0.5$, $0 < \alpha < 2$); $Li_aNi_bE_cG_dO_2$ ($0.90 \leq a \leq 1.8$, $0 \leq b \leq 0.9$, $0 \leq c \leq 0.5$, $0.001 \leq d \leq 0.1$); $Li_aNi_bCo_cMn_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNi_bCo_cAl_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNi_bCo_cMn_dG_eO_2$ ($0.90 \leq a \leq 1.8$, $0 \leq b \leq 0.9$, $0 \leq c \leq 0.5$, $0 \leq d \leq 0.5$, $0.001 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMm_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $QO_2$; $QS_2$; $LiQS_2$; $V_2O_5$; $LiV_2O_5$; $LiZO_2$; $LiNiVO_4$; $Li_{(3-f)}J_2PO_{43}$ ($0 \leq f \leq 2$); $Li_{(3-f)}Fe_2PO_{43}$ ($0 \leq f \leq 2$); $Li_aFePO_4$ ($0.90 \leq a \leq 1.8$)

In the above chemical formulae, A is selected from Ni, Co, Mn, and a combination thereof; X is selected from Al, Ni, Co, Mn, Cr, Fe, Mg, Sr, V, a rare earth element, and a combination thereof; $D^1$ is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In an embodiment of the present invention, the positive active material layer may further include a binder and a conductive material. Herein, the binder and the conductive material may be included in an amount of about 1 wt% to about 5 wt%, respectively based on the total amount of the positive active material layer.

The binder improves binding properties of positive electrode active material particles with one another and with a current collector. Examples of the binder may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene butadiene rubber, acrylated styrene butadiene rubber, an epoxy resin, nylon, and the like, but are not limited thereto.

The conductive material is included to provide electrode conductivity, and any electrically conductive material may be used as a conductive material unless it causes a chemical change. Examples of the conductive material include

a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may use aluminum foil, nickel foil, or a combination thereof, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, propyl propionate decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. Furthermore, the ketone-based solvent may include cyclohexanone and the like. The alcohol-based solvent may include ethyl alcohol, isopropyl alcohol, and the like, and examples of the aprotic solvent include nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with a desirable battery performance and it may be well known to one in the related art.

Furthermore, the carbonate-based solvent may desirably include a mixture with a cyclic carbonate and a linear carbonate. The cyclic carbonate and linear carbonate are mixed together in a volume ratio of about 1:1 to about 1:9, and when the mixture is used as an electrolyte, it may have enhanced performance.

The organic solvent may further include an aromatic hydrocarbon-based solvent as well as the carbonate-based solvent. The carbonate-based solvent and the aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

[Chemical Formula 1]

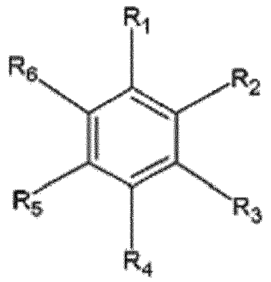

In Chemical Formula 1, $R_1$ to $R_6$ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylethyl carbonate, vinylene carbonate, or an ethylene carbonate-based compound represented by Chemical Formula 2, as an additive for improving cycle life.

[Chemical Formula 2]

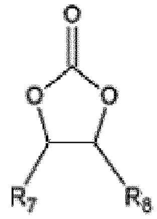

In Chemical Formula 2, $R_7$ and $R_8$ are the same or different and may each independently be hydrogen, a halogen, a cyano group (CN), a nitro group ($NO_2$), or a C1 to C5 fluoroalkyl group, provided that at least one of $R_7$ and $R_8$ is a halogen, a cyano group (CN), a nitro group ($NO_2$), or a C1 to C5 fluoroalkyl group, and $R_7$ and $R_8$ are not simultaneously hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, and the like. An amount of the additive for improving the cycle-life characteristics may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one or two supporting salts $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide: LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$, wherein x and y are natural numbers, for example, an integer of about 1 to about 20), lithium difluoro(bisoxolato) phosphate), LiCl, LiI, $LiB(C_2O_4)_2$(lithium bis(oxalato) borate: LiBOB) and lithium difluoro(oxalato)borate (LiDFOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

A separator may be disposed between the positive electrode and the negative electrode depending on a type of a rechargeable lithium battery. The separator may use polyethylene, polypropylene, polyvinylidene fluoride, or multilayers thereof having two or more layers, and may be a mixed multilayer such as a polyethylene/polypropylene double-layered separator, a polyethylene/polypropylene/polyethylene triple-layered separator, a polypropylene/polyethylene/polypropylene triple-layered separator, and the like.

FIG. 2 is an exploded perspective view of a rechargeable lithium battery according to an embodiment. The rechargeable lithium battery according to an embodiment is illustrated as a prismatic battery but is not limited thereto and may include variously-shaped batteries such as a cylindrical battery, a pouch battery, and the like.

Referring to FIG. 2, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20, and the separator 30.

Hereinafter, examples of the present invention and comparative examples are described. These examples, however, are not in any sense to be interpreted as limiting the scope of the invention.

<Cell configuration modification Test>

(Example 1)

96 wt% of an artificial graphite negative active material, 1 wt% of a styrene-butadiene rubber binder, 1 wt% of a carboxymethyl cellulose thickener, and 2 wt% of a carbon black conductive material were mixed in a water solvent to prepare a negative active material layer slurry.

The negative active material layer slurry was coated on a copper foil current collector and dried followed by pressing to prepare a negative active material layer on the current collector.

The obtained product was subjected to needle punching to form holes with a hole depth of 20 $\mu m$ and a hole diameter of 20 $\mu m$ at a hole density of 100 $pt/mm^2$ and a hole pitch of 100 $\mu m$, thereby preparing a negative electrode including a negative active material layer having holes. An active mass density of the negative electrode was 1.45 $g/cm^3$, the one side thickness of the negative active material layer was 124 $\mu m$, and the one side loading level (L/L) was 18.0 $mg/cm^2$.

95 wt% of a $LiCoO_2$ positive active material, 3 wt% of a polyvinylidene fluoride binder, and 2 wt% of a ketjen

black conductive material were mixed in an N-methyl pyrrolidone solvent to prepare a positive active material slurry. The positive active material slurry was coated on an aluminum current collector and dried followed by pressing to prepare a positive electrode.

Using the negative electrode, a polyethylene/polypropylene separator, the positive electrode, and an electrolyte, a rechargeable lithium cell with a current density of 3 mA/cm$^2$ was fabricated by the general procedure. The electrolyte was prepared by using a mixed solvent of ethylene carbonate and diethyl carbonate (50:50 volume ratio) and dissolving 1 M $LiPF_6$ therein.

(Example 2)

A negative electrode was prepared by the same procedure as in Example 1, except that active mass density was changed to 1.5 g/cm$^3$, and the one side thickness of the negative active material layer was changed to 120 $\mu$m. Using the negative electrode, a rechargeable lithium cell was fabricated by the same procedure as in Example 1.

(Example 3)

A negative electrode was prepared by the same procedure as in Example 1, except that active mass density was changed to 1.53 g/cm$^3$, and the one side thickness of the negative active material layer was changed to 118 $\mu$m. Using the negative electrode, a rechargeable lithium cell was fabricated by the same procedure as in Example 1.

(Example 4)

A negative electrode was prepared by the same procedure as in Example 1, except that active mass density was changed to 1.58 g/cm$^3$, and the one side thickness of the negative active material layer was changed to 114 $\mu$m. Using the negative electrode, a rechargeable lithium cell was fabricated by the same procedure as in Example 1.

(Example 5)

A negative electrode was prepared by the same procedure as in Example 1, except that active mass density was changed to 1.53 g/cm$^3$, the one side thickness of the negative active material layer was changed to 106 $\mu$m, and the one side loading level (L/L) was changed to 16.2 mg/cm$^2$. Using the negative electrode, the electrolyte and the separator of Example 1, a rechargeable lithium cell with a current density of 2.7 mA/cm$^2$ was fabricated by the general method.

(Example 6)

A negative electrode was prepared by the same procedure as in Example 1, except that active mass density was changed to 1.53 g/cm$^3$, the one side thickness of the negative active material layer was changed to 137 $\mu$m, and the one side loading level (L/L) was changed to 21.0 mg/cm$^2$. Using the negative electrode, the electrolyte and the separator of Example 1, a rechargeable lithium cell with a current density of 3.5 mA/cm$^2$ was fabricated by the general method.

(Comparative Example 1)

A negative electrode was prepared by the same procedure as in Example 1, except that the needle punching was not performed, active mass density was changed to 1.45 g/cm$^3$, the one side thickness of the negative active material layer was changed to 124 $\mu$m, and the one side loading level (L/L) was changed to 18.0 mg/cm$^2$. Using the negative electrode, a rechargeable lithium cell was fabricated by the same procedure as in Example 1.

(Comparative Example 2)

A negative electrode was prepared by the same procedure as in Example 2, except that the needle punching was not performed, active mass density was changed to 1.5 g/cm$^3$, the one side thickness of the negative active material layer was changed to 120 $\mu$m, and the one side loading level (L/L) was changed to 18.0 mg/cm$^2$. Using the negative electrode, a rechargeable lithium cell was fabricated by the same procedure as in Example 2.

(Comparative Example 3)

A negative electrode was prepared by the same procedure as in Example 3, except that the needle punching was not performed, active mass density was changed to 1.53 g/$cm^3$, the one side thickness of the negative active material layer was changed to 118 μm, and the one side loading level (L/L) was changed to 18.0 mg/$cm^2$. Using the negative electrode, a rechargeable lithium cell was fabricated by the same procedure as in Example 3.

(Comparative Example 4)

A negative electrode was prepared by the same procedure as in Example 4, except that the needle punching was not performed, active mass density was changed to 1.58 g/$cm^3$, the one side thickness of the negative active material layer was changed to 114 μm, and the one side loading level (L/L) was changed to 18.0 mg/$cm^2$. Using the negative electrode, a rechargeable lithium cell was fabricated by the same procedure as in Example 4.

(Comparative Example 5)

A negative electrode was prepared by the same procedure as in Example 5, except that the needle punching was not performed, active mass density was changed to 1.53 g/$cm^3$, the one side thickness of the negative active material layer was changed to 106 μm, and the one side loading level (L/L) was changed to 16.2 mg/$cm^2$. Using the negative electrode, the electrolyte, and the separator of Example 1, a rechargeable lithium cell with a current density of 2.7 mA/$cm^2$ was fabricated by the general method.

(Comparative Example 6)

A negative electrode was prepared by the same procedure as in Example 6, except that the needle punching was not performed, active mass density was changed to 1.53 g/$cm^3$, the one side thickness of the negative active material layer was changed to 137 μm, and the one side loading level (L/L) was changed to 21.0 mg/$cm^2$. Using the negative electrode, the electrolyte, and the separator of Example 1, a rechargeable lithium cell with a current density of 3.5 mA/$cm^2$ was fabricated by the general method.

(Example 7)

25 wt% of polyacrylic acid and 75 wt% of polyvinylidene fluoride were mixed in a water solvent to prepare an adhesive layer slurry.

The negative active material layer slurry of Example 1 was coated on a copper foil current collector and dried followed by pressing to prepare a negative active material layer on the current collector. Thereafter, the adhesive layer slurry was coated on the negative active material layer and dried followed by pressing to prepare an adhesive layer.

The product in which the negative active material layer and the adhesive layer were prepared was subjected to needle punching to form holes with a hole depth of 20 μm and a hole diameter of 20 μm at a hole density of 100 pt/$mm^2$ and a hole pitch of 100 μm, thereby preparing a negative electrode including a negative active material layer having holes. An active mass density of the negative electrode was 1.45 g/$cm^3$, the one side thickness of the negative active material layer was 124 μm, and the one side loading level (L/L) was 18.0 mg/$cm^2$.

95 wt% of a $LiCoO_2$ positive active material, 3 wt% of a polyvinylidene fluoride binder, and 2 wt% of a ketjen black conductive material were mixed in an N-methyl pyrrolidone solvent to prepare a positive active material slurry. The positive active material slurry was coated on an aluminum current collector and dried followed by pressing to prepare a positive electrode.

Using the negative electrode, a polyethylene/polypropylene separator, the positive electrode, and an electrolyte, a rechargeable lithium cell with a current density of 3 mA/$cm^2$ was fabricated by the general procedure. The electrolyte was prepared by using a mixed solvent of ethylene carbonate and diethyl carbonate (50:50 volume ratio) and dissolving 1 M $LiPF_6$ therein.

(Example 8)

A negative electrode was prepared by the same procedure as in Example 7, except that active mass density was changed to 1.5 g/$cm^3$, and the one side thickness of the negative active material layer was changed to 120 μm. Using the negative electrode, a rechargeable lithium cell was fabricated by the same procedure as in Example 7.

(Example 9)

A negative electrode was prepared by the same procedure as in Example 7, except that active mass density was changed to 1.53 g/cm$^3$, and the one side thickness of the negative active material layer was changed to 118 μm. Using the negative electrode, a rechargeable lithium cell was fabricated by the same procedure as in Example 7.

(Example 10)

A negative electrode was prepared by the same procedure as in Example 7, except that active mass density was changed to 1.58 g/cm$^3$, and the one side thickness of the negative active material layer was changed to 114 μm. Using the negative electrode, a rechargeable lithium cell was fabricated by the same procedure as in Example 7.

(Example 11)

A negative electrode was prepared by the same procedure as in Example 7, except that active mass density was changed to 1.53 g/cm$^3$, the one side thickness of the negative active material layer was changed to 106 μm, and the one side loading level (L/L) was changed to 16.2 mg/cm$^2$. Using the negative electrode, the electrolyte, and the separator of Example 7, a rechargeable lithium cell with a current density of 2.7 mA/cm$^2$ was fabricated by the general method.

(Example 12)

A negative electrode was prepared by the same procedure as in Example 1, except that active mass density was changed to 1.53 g/cm$^3$, the one side thickness of the negative active material layer was changed to 137 μm, and the one side loading level (L/L) was changed to 21.0 mg/cm$^2$. Using the negative electrode, the electrolyte, and the separator of Example 7, a rechargeable lithium cell with a current density of 3.5 mA/cm$^2$ was fabricated by the general method.

(Comparative Example 7)

A negative electrode was prepared by the same procedure as in Example 7, except that the needle punching was not performed, active mass density was changed to 1.45 g/cm$^3$, the one side thickness of the negative active material layer was changed to 124 μm, and the one side loading level (L/L) was changed to 18.0 mg/cm$^2$. Using the negative electrode, a rechargeable lithium cell was fabricated by the same procedure as in Example 7.

(Comparative Example 8)

A negative electrode was prepared by the same procedure as in Example 8, except that the needle punching was not performed, active mass density was changed to 1.5 g/cm$^3$, the one side thickness of the negative active material layer was changed to 120 μm, and the one side loading level (L/L) was changed to 18.0 mg/cm$^2$. Using the negative electrode, a rechargeable lithium cell was fabricated by the same procedure as in Example 8.

(Comparative Example 9)

A negative electrode was prepared by the same procedure as in Example 9, except that the needle punching was not performed, active mass density was changed to 1.53 g/cm$^3$, the one side thickness of the negative active material layer was changed to 118 μm, and the one side loading level (L/L) was changed to 18.0 mg/cm$^2$. Using the negative electrode, a rechargeable lithium cell was fabricated by the same procedure as in Example 9.

(Comparative Example 10)

A negative electrode was prepared by the same procedure as in Example 10, except that the needle punching was not performed, active mass density was changed to 1.58 g/cm$^3$, the one side thickness of the negative active material layer was changed to 114 μm, and the one side loading level (L/L) was changed to 18.0 mg/cm$^2$. Using the negative electrode, a rechargeable lithium cell was fabricated by the same procedure as in Example 10.

(Comparative Example 11)

A negative electrode was prepared by the same procedure as in Example 11, except that the needle punching was not performed, active mass density was changed to 1.53 g/$cm^3$, the one side thickness of the negative active material layer was changed to 106 μm, and the one side loading level (L/L) was changed to 16.2 mg/$cm^2$. Using the negative electrode, the electrolyte, and the separator of Example 7, a rechargeable lithium cell with a current density of 2.7 mA/$cm^2$ was fabricated by the general method.

(Comparative Example 12)

A negative electrode was prepared by the same procedure as in Example 12, except that the needle punching was not performed, active mass density was changed to 1.53 g/$cm^3$, the one side thickness of the negative active material layer was changed to 137 μm, and the one side loading level (L/L) was changed to 21.0 mg/$cm^2$. Using the negative electrode, the electrolyte and the separator of Example 1, a rechargeable lithium cell with a current density of 3.5 mA/$cm^2$ was fabricated by the general method.

The battery cell configurations of Examples 1 to 12 and Comparative Examples 1 to 12 are summarized in Table 1.

Experimental Example 1) Evaluation of adherence

In the negative electrodes according to Examples 1 to 12 and Comparative Examples 1 to 12, it was measured whether the active material layer was detached or not.

The negative electrode was cut into a circle with a diameter of 36 mm, and powder detached therefrom during the process was removed by air blowing and a weight of the cut negative electrode was measured to obtain an initial weight of the negative electrode.

The cut negative electrode was folded in half in the longitudinal direction, the folded portion was pressed once with a metal roll by 500 g, and then flattened. Thereafter, it was folded in half in the horizontal direction and the folded part was pressed once with a metal roll at 500 g. Thereafter, the negative electrode was flattened and the detached powder was removed, and a weight of the flattened negative electrode was measured to obtain a final weight of the negative electrode weight.

The detached amount was calculated by the following Equation 1 and the no detachment of the active material layer (the detached amount is 10 % or less) was to be OK and the detachment of the active material layer (the detached amount is more than 10 %) was to be NG. The results are shown in Table 2.

[Equation 1]

Detached amount (%) = [(initial weight of negative electrode-final amount of negative electrode weight)/initial weight of negative electrode]*100

Experimental Example 2) Evaluation of capacity

The rechargeable lithium cells according to Examples 1 to 12 and Comparative Examples 1 to 12 were charged and discharged once at 0.1C, and the discharge capacity was measured. The results are shown in Table 2, as cell capacity.

Experimental Example 3) Evaluation of capacity retention

The rechargeable lithium cells according to Examples 1 to 12 and Comparative Examples 1 to 12 were charged and discharged at 3 C for 200 cycles. The ratio of the discharge capacity at the 200th cycle to the discharge capacity at the $1^{st}$ was obtained. The results are shown in Table 2.

Experimental Example 4) Evaluation of swelling characteristic

The rechargeable lithium cells according to Examples 1 to 12 and Comparative Examples 1 to 12 were charged and discharged at 3 C for 200 cycles. Thickness of the cell before charge and discharge and thickness of the cell after charge and discharge were measured, respectively. The increase ratio % of the thickness after 200 cycles to thickness before charging and discharging which was to be 100 %, was measured. The results are shown in Table 2, as swelling.

Experimental Example 5) Evaluation of resistance characteristic

The rechargeable lithium cells according to Examples 1 to 12 and Comparative Examples 1 to 12 were charged and discharged at 3C for 200 cycles, and resistance was measured. The results are shown in Table 2.

Table 1

| | Presence of hole or not | Hole density (pt/mm$^2$) | Hole pitch (μm) | Hole depth (μm) | Hole diameter (μm) | Presence of adhesive layer or not | Current density (mA/cm$^2$) | Loading level (mg/cm$^2$) | Active mass density (g/cm$^3$) | Active material layer thickness (μm) |
|---|---|---|---|---|---|---|---|---|---|---|
| Comparative Example 1 | No | - | - | - | - | No | 3 | 18.0 | 1.45 | 124 |
| Comparative Example 2 | No | - | - | - | - | No | 3 | 18.0 | 1.5 | 120 |
| Comparative Example 3 | No | - | - | - | - | No | 3 | 18.0 | 1.53 | 118 |
| Comparative Example 4 | No | - | - | - | - | No | 3 | 18.0 | 1.58 | 114 |
| Comparative Example 5 | No | - | - | - | - | No | 2.7 | 16.2 | 1.53 | 106 |
| Comparative Example 6 | No | - | - | - | - | No | 3.5 | 21.0 | 1.53 | 137 |
| Example 1 | Yes | 100 | 100 | 20 | 20 | No | 3 | 18.0 | 1.45 | 124 |
| Example 2 | Yes | 100 | 100 | 20 | 20 | No | 3 | 18.0 | 1.5 | 120 |
| Example 3 | Yes | 100 | 100 | 20 | 20 | No | 3 | 18.0 | 1.53 | 118 |
| Example 4 | Yes | 100 | 100 | 20 | 20 | No | 3 | 18.0 | 1.58 | 114 |
| Example 5 | Yes | 100 | 100 | 20 | 20 | No | 2.7 | 16.2 | 1.53 | 106 |
| Example 6 | Yes | 100 | 20 | 20 | 20 | No | 3.5 | 21.0 | 1.53 | 137 |
| Comparative Example 7 | No | - | - | - | - | Yes | 3 | 18.0 | 1.45 | 124 |
| Comparative Example 8 | No | - | - | - | - | Yes | 3 | 18.0 | 1.5 | 120 |
| Comparative Example 9 | No | - | - | - | - | Yes | 3 | 18.0 | 1.53 | 118 |
| Comparative Example 10 | No | - | - | - | - | Yes | 3 | 18.0 | 1.58 | 114 |

(continued)

| | Presence of hole or not | Hole density (pt/mm$^2$) | Hole pitch (μm) | Hole depth (μm) | Hole diameter (μm) | Presence of adhesive layer or not | Current density (mA/cm$^2$) | Loading level (mg/cm$^2$) | Active mass density (g/cm$^3$) | Active material layer thickness (μm) |
|---|---|---|---|---|---|---|---|---|---|---|
| Comparative Example 11 | No | - | - | - | - | Yes | 2.7 | 16.2 | 1.53 | 106 |
| Comparative Example 12 | No | - | - | - | - | Yes | 3.5 | 21.0 | 1.53 | 137 |
| Example 7 | Yes | 100 | 100 | 20 | 20 | Yes | 3 | 18.0 | 1.45 | 124 |
| Example 8 | Yes | 100 | 100 | 20 | 20 | Yes | 3 | 18.0 | 1.5 | 120 |
| Example 9 | Yes | 100 | 100 | 20 | 20 | Yes | 3 | 18.0 | 1.53 | 118 |
| Example 10 | Yes | 100 | 100 | 20 | 20 | Yes | 3 | 18.0 | 1.58 | 114 |
| Example 11 | Yes | 100 | 100 | 20 | 20 | Yes | 2.7 | 16.2 | 1.53 | 106 |
| Example 12 | Yes | 100 | 20 | 20 | 20 | Yes | 3.5 | 21.0 | 1.53 | 137 |

Table 2

| | Adherence | | Cell capacity (mAh) | Capacity retention (%) | Swelling (%) | Resistance (Ω) |
|---|---|---|---|---|---|---|
| | Degree of adhesion | Amount of detachment (%) | | | | |
| Comparative Example 1 | OK | 0.44 | 99.6 | 95.0 | 5.90 | 9.9 |
| Comparative Example 2 | OK | 0.41 | 99.8 | 94.5 | 6.00 | 10.0 |
| Comparative Example 3 | OK | 0.43 | 99.4 | 93.0 | 6.30 | 10.1 |
| Comparative Example 4 | OK | 0.40 | 100.3 | 88.0 | 7.30 | 10.5 |
| Comparative Example 5 | OK | 0.41 | 99.5 | 95.3 | 5.84 | 9.9 |
| Comparative Example 6 | OK | 0.42 | 100.9 | 89.5 | 7.00 | 10.4 |
| Example 1 | OK | 0.43 | 99.5 | 95.2 | 4.10 | 9.9 |
| Example 2 | OK | 0.43 | 99.2 | 94.8 | 4.18 | 10.0 |
| Example 3 | OK | 0.43 | 100.7 | 94.2 | 4.30 | 9.1 |
| Example 4 | OK | 0.48 | 99.2 | 92.0 | 4.74 | 10.2 |
| Example 5 | OK | 0.44 | 99.8 | 96.0 | 3.94 | 9.9 |
| Example 6 | OK | 0.45 | 100.1 | 92.0 | 4.74 | 10.2 |
| Comparative Example 7 | OK | 0.46 | 100.5 | 94.8 | 3.70 | 13.0 |
| Comparative Example 8 | OK | 0.42 | 100.2 | 94.2 | 8.82 | 13.0 |
| Comparative Example 9 | OK | 0.48 | 100.6 | 91.8 | 4.30 | 12.1 |
| Comparative Example 10 | OK | 0.50 | 99.8 | 86.0 | 5.46 | 13.7 |
| Comparative Example 11 | OK | 0.40 | 99.30 | 94.8 | 3.70 | 13.0 |
| Comparative Example 12 | OK | 0.45 | 100.7 | 88.0 | 5.06 | 13.5 |
| Example 7 | OK | 0.41 | 99.3 | 94.8 | 2.84 | 10.0 |
| Example 8 | OK | 0.48 | 101.00 | 94.6 | 2.86 | 10.0 |
| Example 9 | OK | 0.47 | 99.5 | 94.0 | 2.90 | 9.9 |
| Example 10 | OK | 0.47 | 100.2 | 91.4 | 3.08 | 10.2 |
| Example 11 | OK | 0.43 | 100.5 | 95.9 | 2.77 | 9.9 |
| Example 12 | OK | 0.47 | 99.2 | 91.9 | 3.05 | 10.2 |

As shown in Table 2, Examples 1 to 12 in which a plurality of holes were formed on the active material layer at a hole density of 100 pt/mm$^2$ or more exhibited improved capacity retention at the same loading level, compared to Comparative Examples 1 to 12. From these results, even though the adhesive layer is prepared, along with the hole (Example 7 to 12), the capacity retention was improved at the same active mass density.

Furthermore, Examples 1 to 12 exhibited good swelling characteristics (i.e., low swelling) compared to Comparative Examples 1 to 12, and lower resistance than Comparative Examples 1 to 12.

**<Test for modification of hole density-using needle punching>**

(Comparative Examples 13 to 16, Examples 13 to 20, and Reference Examples 1 to 3)

A negative electrode having a negative active material layer and an adhesive layer was prepared by the same procedure as in Example 9, except that the obtained product was subjected to needle punching to change hole density, hole pitch, hole depth and hole diameter to as shown in Table 3.

Using the negative electrode, the electrolyte, and the separator of Example 9, a rechargeable lithium cell with a current density shown in Table 3 was fabricated by the general method.

The cell characteristics of Examples 13 to 20, Comparative Examples 13 to 16, and Reference Examples 1 to 3 were measured by the same methods as in Experimental Examples 1 to 5. The results are shown in Table 4. For comparison, the results of Comparative Examples 9 and 12, and Example 9 are also shown in Table 4.

Table 3

| | Presence of hole or not | Hole density (pt/mm$^2$) | Hole pitch ($\mu$m) | Hole depth ($\mu$m) | Hole diameter ($\mu$m) | Presence of adhesive layer or not | Current density (mA/cm$^2$) | Loading level (mg/cm$^2$) | Active mass density (g/cm$^3$) | Active material layer thickness ($\mu$m) |
|---|---|---|---|---|---|---|---|---|---|---|
| Comparative Example 9 | No | - | - | - | - | Yes | 3 | 18.0 | 1.53 | 118 |
| Comparative Example 13 | Yes | 50 | 142 | 20 | 20 | Yes | 3 | 18.0 | 1.53 | 118 |
| Example 9 | Yes | 100 | 100 | 20 | 20 | Yes | 3 | 18.0 | 1.53 | 118 |
| Example 13 | Yes | 200 | 71 | 20 | 20 | Yes | 3 | 18.0 | 1.53 | 118 |
| Example 14 | Yes | 625 | 40 | 10 | 10 | Yes | 3 | 18.0 | 1.53 | 118 |
| Reference Example 1 | Yes | 800 | 35.4 | 10 | 10 | Yes | 3 | 18.0 | 1.53 | 118 |
| Comparative Example 12 | No | - | - | 20 | - | Yes | 3.5 | 21.0 | 1.53 | 137 |
| Comparative Example 14 | Yes | 50 | 142 | 20 | 20 | Yes | 3.5 | 21.0 | 1.53 | 137 |
| Example 15 | Yes | 100 | 100 | 20 | 20 | Yes | 3.5 | 21.0 | 1.53 | 137 |
| Example 16 | Yes | 200 | 71 | 20 | 20 | Yes | 3.5 | 21.0 | 1.53 | 137 |
| Example 17 | Yes | 625 | 40 | 10 | 10 | Yes | 3.5 | 21.0 | 1.53 | 137 |
| Reference Example 2 | Yes | 800 | 35.4 | 10 | 10 | Yes | 3.5 | 21.0 | 1.53 | 137 |
| Comparative Example 15 | No | - | - | - | - | Yes | 6.1 | 34.0 | 1.53 | 222 |
| Comparative Example 16 | Yes | 50 | 142 | 20 | 20 | Yes | 6.1 | 34.0 | 1.53 | 222 |
| Example 18 | Yes | 100 | 100 | 20 | 20 | Yes | 6.1 | 34.0 | 1.53 | 222 |
| Example 19 | Yes | 200 | 71 | 20 | 20 | Yes | 6.1 | 34.0 | 1.53 | 222 |
| Example 20 | Yes | 625 | 40 | 10 | 10 | Yes | 6.1 | 34.0 | 1.53 | 222 |
| Reference Example 3 | Yes | 800 | 35.4 | 10 | 10 | Yes | 6.1 | 34.0 | 1.53 | 222 |

Table 4

| | Adherence | | Cell capacity (mAh) | Capacity retention (%) | Swelling (%) | Resistance (Ω) |
|---|---|---|---|---|---|---|
| | Degree of adhesion | Amount of detachment (%) | | | | |
| Comparative Example 9 | OK | 0.48 | 99.6 | 91.8 | 4.30 | 12.1 |
| Comparative Example 13 | OK | 0.48 | 99.30 | 92.3 | 3.02 | 10.2 |
| Example 9 | OK | 0.46 | 100.8 | 94.0 | 2.90 | 9.9 |
| Example 13 | OK | 0.48 | 100.1 | 95.2 | 2.82 | 10.2 |
| Example 14 | OK | 0.45 | 100.0 | 95.8 | 2.81 | 10.1 |
| Reference Example 1 | NG | 1.23 | 98.6 | - | - | - |
| Comparative Example 12 | OK | 0.45 | 100.7 | 88.0 | 5.06 | 13.5 |
| Comparative Example 14 | OK | 0.41 | 100.50 | 88.8 | 3.42 | 13.0 |
| Example 15 | OK | 0.43 | 100.1 | 91.9 | 3.20 | 13.1 |
| Example 16 | OK | 0.40 | 99.4 | 93.2 | 3.11 | 15.1 |
| Example 17 | OK | 0.42 | 99.6 | 93.4 | 3.10 | 14.8 |
| Reference Example 2 | NG | 1.12 | 98.90 | - | - | - |
| Comparative Example 15 | OK | 0.43 | 100.8 | 80.0 | 5.92 | 12.9 |
| Comparative Example 16 | OK | 0.47 | 99.3 | 81.7 | 5.79 | 13.5 |
| Example 18 | OK | 0.41 | 100.3 | 87.8 | 5.30 | 10.0 |
| Example 19 | OK | 0.41 | 99.3 | 89.6 | 5.16 | 10.1 |
| Example 20 | OK | 0.43 | 99.5 | 90.1 | 5.10 | 10.2 |
| Reference Example 3 | NG | 1.24 | 98.60 | - | - | - |

As shown in Table 4, Examples 9 and 13 to 20 in which holes were formed at a suitable hole density exhibited excellent capacity retention, an excellent swelling characteristic and low resistance at the same loading level. Whereas, if the holes were not formed (Comparative Examples 9, and 12 and 15), or even if holes were formed, Comparative Examples 13, 14 and 16 having too low hole density exhibited low capacity retention, deteriorated swelling characteristics, and high resistance at the same loading level. In addition, Reference Examples 1 to 3 having too high hole density of 800 pt/mm$^2$, exhibited too weak adherence, causing detachment.

**<Test for modification of hole density-using laser processing>**

(Comparative Example 17 to 19, Examples 21 to 29)

A negative electrode having a negative active material layer and an adhesive layer was prepared by the same procedure as in Example 9, except that the obtained product was subjected to laser processing using a WS-FLEX IR Femtosecond laser work station to change hole density, hole pitch, hole depth and hole diameter to as shown in Table 5.

Using the negative electrode, the electrolyte, and the separator of Example 9, a rechargeable lithium cell with

a current density shown in Table 5 was fabricated by the general method.

The cell characteristics of Examples 21 to 29 and Comparative Examples 17 to 19 were measured by the same methods as in Experimental Examples 1 to 5. The results are shown in Table 6. For comparison, the results of Comparative Examples 9, 12, and 15 are also shown in Table 6.

Table 5

| | Presence of hole or not | Hole density ($pt/mm^2$) | Hole pitch (μm) | Hole depth (μm) | Hole diameter (μm) | Presenc e of adhesive layer or not | Current density ($mA/cm^2$) | Loading level ($mg/cm^2$) | Active mass density ($g/cm^3$) | Active material layer thickness (μm) |
|---|---|---|---|---|---|---|---|---|---|---|
| Comparative Example 9 | No | - | - | - | - | Yes | 3 | 18.0 | 1.53 | 118 |
| Comparative Example 17 | Yes | 50 | 142 | 20 | 5 | Yes | 3 | 18.0 | 1.53 | 118 |
| Example 21 | Yes | 100 | 100 | 20 | 5 | Yes | 3 | 18.0 | 1.53 | 118 |
| Example 22 | Yes | 200 | 71 | 20 | 5 | Yes | 3 | 18.0 | 1.53 | 118 |
| Example 23 | Yes | 300 | 57 | 20 | 5 | Yes | 3 | 18.0 | 1.53 | 118 |
| Comparative Example 12 | No | - | - | 20 | - | Yes | 3.5 | 21.0 | 1.53 | 137 |
| Comparative Example 18 | Yes | 50 | 142 | 20 | 5 | Yes | 3.5 | 21.0 | 1.53 | 137 |
| Example 24 | Yes | 100 | 100 | 20 | 5 | Yes | 3.5 | 21.0 | 1.53 | 137 |
| Example 25 | Yes | 200 | 71 | 20 | 5 | Yes | 3.5 | 21.0 | 1.53 | 137 |
| Example 26 | Yes | 300 | 57 | 20 | 5 | Yes | 3.5 | 21.0 | 1.53 | 137 |
| Comparative Example 15 | No | - | - | - | - | Yes | 6.1 | 34.0 | 1.53 | 222 |
| Comparative Example 19 | Yes | 50 | 142 | 20 | 20 | Yes | 6.1 | 34.0 | 1.53 | 222 |
| Example 27 | Yes | 100 | 100 | 20 | 20 | Yes | 6.1 | 34.0 | 1.53 | 222 |
| Example 28 | Yes | 200 | 71 | 20 | 20 | Yes | 6.1 | 34.0 | 1.53 | 222 |
| Example 29 | Yes | 300 | 57 | 20 | 20 | Yes | 6.1 | 34.0 | 1.53 | 222 |

Table 6

| | Adherence | | Cell capacity (mAh) | Capacity retention (%) | Swelling (%) | Resistance (Ω) |
|---|---|---|---|---|---|---|
| | Degree of adhesion | Amount of detachment (%) | | | | |
| Comparative Example 9 | OK | 0.48 | 99.6 | 91.8 | 4.30 | 12.1 |
| Comparative Example 17 | OK | 0.49 | 99.4 | 92.1 | 4.09 | 9.9 |
| Example 21 | OK | 0.50 | 100.7 | 93.8 | 3.83 | 10.4 |
| Example22 | OK | 0.42 | 99.7 | 95.1 | 3.74 | 12.1 |
| Example 23 | OK | 0.46 | 98.60 | 95.5 | 3.70 | 10.2 |
| Comparative Example 12 | OK | 0.45 | 100.7 | 88.0 | 5.06 | 13.5 |
| Comparative Example 18 | OK | 0.47 | 99.3 | 88.6 | 4.81 | 10.2 |
| Example 24 | OK | 0.41 | 100.1 | 91.6 | 4.50 | 13.1 |
| Example 25 | OK | 0.44 | 99.8 | 93.1 | 4.40 | 13.5 |
| Example 26 | OK | 0.45 | 99.9 | 94.1 | 4.35 | 13.0 |
| Comparative Example 15 | OK | 0.43 | 100.8 | 80.0 | 5.92 | 12.9 |
| Comparative Example 19 | OK | 0.42 | 100.3 | 81.5 | 5.63 | 15.1 |
| Example 27 | OK | 0.40 | 100.5 | 87.6 | 5.27 | 13.1 |
| Example 28 | OK | 0.49 | 100.6 | 89.4 | 5.15 | 12.9 |
| Example 29 | OK | 0.46 | 100.1 | 92.1 | 5.09 | 13.5 |

As shown in Table 6, Examples 21 to 29 in which holes were formed at a suitable hole density exhibited excellent capacity retention, excellent swelling characteristics and low resistance at the same loading level. Whereas, if the holes were not formed (Comparative Examples 9, 12, and 15), or even if holes were formed, Comparative Examples 17 to 20 having too low a hole density exhibited low capacity retention, deteriorated swelling characteristics, and high resistance at the same loading level.

**<Test for modification of hole depth-using needle punching>**

(Examples 30 to 41)

A negative electrode having a negative active material layer and an adhesive layer was prepared by the same procedure as in Example 9, except that the obtained product was subjected to needle punching to change hole density, hole pitch, hole depth and hole diameter to as shown in Table 7.

Using the negative electrode, the electrolytes and the separator of Example 9, a rechargeable lithium cell with a current density of 3 $mA/cm^2$ was fabricated by the general method.

The cell characteristics of Examples 30 to 41 were measured by the same methods as in Experimental Examples 1 to 5. The results are shown in Table 8. For comparison, the results of Comparative Examples 9, 12, and 15 are also shown in Table 8.

Table 7

| | Presence of hole or not | Hole density ($pt/mm^2$) | Hole pitch ($\mu m$) | Hole depth ($\mu m$) | Hole diameter ($\mu m$) | Presence of adhesive layer or not | Current density ($mA/cm^2$) | Loading level ($mg/cm^2$) | Active mass density ($g/cm^3$) | Active material layer thickness ($\mu m$) |
|---|---|---|---|---|---|---|---|---|---|---|
| Comparative Example 9 | No | - | - | - | - | Yes | 3 | 18.0 | 1.53 | 118 |
| Example 30 | Yes | 200 | 71 | 5 | 20 | Yes | 3 | 18.0 | 1.53 | 118 |
| Example 31 | Yes | 200 | 71 | 10 | 20 | Yes | 3 | 18.0 | 1.53 | 118 |
| Example 32 | Yes | 200 | 71 | 20 | 20 | Yes | 3 | 18.0 | 1.53 | 118 |
| Example 33 | Yes | 200 | 71 | 40 | 20 | Yes | 3 | 18.0 | 1.53 | 118 |
| Comparative Example 12 | No | - | - | - | - | Yes | 3.5 | 21.0 | 1.53 | 137 |
| Example 34 | Yes | 200 | 71 | 5 | 20 | Yes | 3.5 | 21.0 | 1.53 | 137 |
| Example 35 | Yes | 200 | 71 | 10 | 20 | Yes | 3.5 | 21.0 | 1.53 | 137 |
| Example 36 | Yes | 200 | 71 | 20 | 20 | Yes | 3.5 | 21.0 | 1.53 | 137 |
| Example 37 | Yes | 200 | 71 | 40 | 20 | Yes | 3.5 | 21.0 | 1.53 | 137 |
| Comparative Example 15 | No | - | - | - | - | Yes | 6.1 | 34.0 | 1.53 | 222 |
| Example 38 | Yes | 200 | 71 | 5 | 20 | Yes | 6.1 | 34.0 | 1.53 | 222 |
| Example 39 | Yes | 200 | 71 | 10 | 20 | Yes | 6.1 | 34.0 | 1.53 | 222 |
| Example 40 | Yes | 200 | 71 | 20 | 20 | Yes | 6.1 | 34.0 | 1.53 | 222 |
| Example 41 | Yes | 200 | 71 | 40 | 20 | Yes | 6.1 | 34.0 | 1.53 | 222 |

Table 8

| | Adherence | | Cell capacity (mAh) | Capacity retention (%) | Swelling (%) | Resistance (Ω) |
|---|---|---|---|---|---|---|
| | Degree of adhesion | Amount of detachment (%) | | | | |
| Comparative Example 9 | OK | 0.48 | 99.6 | 91.8 | 4.30 | 12.1 |
| Example 30 | OK | 0.46 | 99.4 | 92.6 | 4.09 | 10.1 |
| Example 31 | OK | 0.47 | 100.8 | 94.8 | 3.83 | - |
| Example 32 | OK | 0.44 | 99.9 | 95.2 | 3.74 | 12.1 |
| Example 33 | OK | 0.40 | 100.1 | 95.4 | 3.70 | 9.9 |
| Comparative Example 12 | OK | 0.45 | 100.7 | 88.0 | 5.06 | 13.5 |
| Example 34 | OK | 0.46 | 99.4 | 88.9 | 4.81 | 12.1 |
| Example 35 | OK | 0.49 | 100.1 | 92.7 | 4.50 | 10.2 |
| Example 36 | OK | 0.49 | 100.5 | 93.2 | 4.40 | 13.5 |
| Example 37 | OK | 0.40 | 99.8 | 93.3 | 4.35 | 10.2 |
| Comparative Example 15 | OK | 0.43 | 100.8 | 80.0 | 5.92 | 12.9 |
| Example 38 | OK | 0.45 | 100.4 | 83.0 | 5.63 | 13.5 |
| Example 39 | OK | 0.41 | 99.2 | 89.2 | 5.27 | 13.0 |
| Example 40 | OK | 0.42 | 99.4 | 89.6 | 5.15 | 12.9 |
| Example 41 | OK | 0.47 | 100.7 | 89.9 | 5.09 | 15.1 |

As shown in Table 8, Examples 30 to 41 in which holes were formed at a suitable hole density exhibited excellent capacity retention, excellent swelling characteristics and low resistance at the same loading level. Whereas, if the holes were not formed (Comparative Examples 9, 12 and 15), they exhibited low capacity retention, deteriorated swelling characteristics, and high resistance at the same loading level.

< **Test for modification of hole depth-using laser processing>**

(Examples 42 to 51 and Reference Examples 4 to 9)

A negative electrode having a negative active material layer and an adhesive layer was prepared by the same procedure as in Example 9, except that the obtained product was subjected to laser processing using a WS-FLEX IR Femtosecond laser work station to change hole density, hole pitch, hole depth and hole diameter into as shown in Table 9.

Using the negative electrode, the electrolyte, and the separator of Example 9, a rechargeable lithium cell with a current density of 3 $mA/cm^2$ was fabricated by the general method.

The cell characteristics of Examples 42 to 53 and Reference Examples 4 to 9 were measured by the same methods as in Experimental Examples 1 to 5. The results are shown in Table 10. For comparison, the results of Examples 22 and 25, and Comparative Examples 9, 12, and 15 are also shown in Table 10.

Table 9

| | Presence of hole or not | Hole density (pt/mm$^2$) | Hole pitch (μm) | Hole depth (μm) | Hole diameter (μm) | Presence of adhesive layer or not | Current density (mA/cm$^2$) | Loading level (mg/cm$^2$) | Active mass density (g/cm$^3$) | Active material layer thickness (μm) |
|---|---|---|---|---|---|---|---|---|---|---|
| Comparative Example 9 | No | - | - | - | - | Yes | 3 | 18.0 | 1.53 | 118 |
| Reference Example 4 | Yes | 200 | 71 | 3 | 5 | Yes | 3 | 18.0 | 1.53 | 118 |
| Example 42 | Yes | 200 | 71 | 5 | 5 | Yes | 3 | 18.0 | 1.53 | 118 |
| Example 43 | Yes | 200 | 71 | 10 | 5 | Yes | 3 | 18.0 | 1.53 | 118 |
| Example 22 | Yes | 200 | 71 | 20 | 5 | Yes | 3 | 18.0 | 1.53 | 118 |
| Example 44 | Yes | 200 | 71 | 40 | 5 | Yes | 3 | 18.0 | 1.53 | 118 |
| Reference Example 5 | Yes | 200 | 71 | 50 | 5 | Yes | 3 | 18.0 | 1.53 | 118 |
| Comparative Example 12 | No | - | - | - | - | Yes | 3.5 | 21.0 | 1.53 | 137 |
| Reference Example 6 | Yes | 200 | 71 | 3 | 5 | Yes | 3.5 | 21.0 | 1.53 | 137 |
| Example 45 | Yes | 200 | 71 | 5 | 5 | Yes | 3.5 | 21.0 | 1.53 | 137 |
| Example 46 | Yes | 200 | 71 | 10 | 5 | Yes | 3.5 | 21.0 | 1.53 | 137 |
| Example 25 | Yes | 200 | 71 | 20 | 5 | Yes | 3.5 | 21.0 | 1.53 | 137 |
| Example 47 | Yes | 200 | 71 | 40 | 5 | Yes | 3.5 | 21.0 | 1.53 | 137 |
| Reference Example 7 | Yes | 200 | 71 | 50 | 5 | Yes | 3.5 | 21.0 | 1.53 | 137 |
| Comparative Example 15 | No | - | - | - | - | Yes | 6.1 | 34.0 | 1.53 | 222 |
| Reference Example 8 | Yes | 200 | 71 | 3 | 5 | Yes | 6.1 | 34.0 | 1.53 | 222 |
| Example 48 | Yes | 200 | 71 | 5 | 5 | Yes | 6.1 | 34.0 | 1.53 | 222 |
| Example 49 | Yes | 200 | 71 | 10 | 5 | Yes | 6.1 | 34.0 | 1.53 | 222 |

(continued)

| | Presence of hole or not | Hole density (pt/mm$^2$) | Hole pitch (μm) | Hole depth (μm) | Hole diameter (μm) | Presence of adhesive layer or not | Current density (mA/cm$^2$) | Loading level (mg/cm$^2$) | Active mass density (g/cm$^3$) | Active material layer thickness (μm) |
|---|---|---|---|---|---|---|---|---|---|---|
| Example 50 | Yes | 200 | 71 | 20 | 5 | Yes | 6.1 | 34.0 | 1.53 | 222 |
| Example 51 | Yes | 200 | 71 | 40 | 5 | Yes | 6.1 | 34.0 | 1.53 | 222 |
| Reference Example 9 | Yes | 200 | 71 | 50 | 5 | Yes | 6.1 | 34.0 | 1.53 | 222 |

Table 10

| | Adherence | | Cell capacity (mAh) | Capacity retention (%) | Swelling (%) | Resistance (Ω) |
|---|---|---|---|---|---|---|
| | Degree of adhesion | Amount of detachment (%) | | | | |
| Comparative Example 9 | OK | 0.48 | 99.6 | 91.8 | 4.30 | 12.1 |
| Reference Example 4 | OK | 0.45 | 99.6 | 91.8 | 4.30 | 12.7 |
| Example 42 | OK | 0.42 | 99.3 | 92.3 | 4.09 | 12.9 |
| Example 43 | OK | 0.47 | 99.9 | 94.5 | 3.83 | 13.5 |
| Example 22 | OK | 0.42 | 99.9 | 94.9 | 3.74 | 12.1 |
| Example 44 | OK | 0.42 | 100.4 | 95.5 | 3.70 | 10.1 |
| Reference Example 5 | NG | 1.25 | 98.5 | - | - | - |
| Comparative Example 12 | OK | 0.45 | 100.7 | 88.0 | 5.06 | 13.5 |
| Reference Example 6 | OK | 0.41 | 100.10 | 87.9 | 5.08 | 14.8 |
| Example 45 | OK | 0.43 | 99.4 | 90.5 | 4.83 | 13.5 |
| Example 46 | OK | 0.48 | 100.4 | 91.0 | 5.66 | 14.6 |
| Example 25 | OK | 0.43 | 100.8 | 91.4 | 5.65 | 15.1 |
| Example 47 | OK | 0.48 | 99.8 | 91.9 | 5.61 | 13.5 |
| Reference Example 7 | NG | 1.31 | 98.10 | - | - | - |
| Comparative Example 15 | OK | 0.43 | 100.8 | 80.0 | 5.92 | 12.9 |
| Reference Example 8 | OK | 0.42 | 99.60 | 80.1 | 5.90 | 14.1 |
| Example 48 | OK | 0.46 | 99.3 | 82.5 | 5.60 | 14.4 |
| Example 49 | OK | 0.45 | 100.3 | 82.9 | 5.25 | 10.9 |
| Example 50 | OK | 0.40 | 100.2 | 83.3 | 5.13 | 13.8 |
| Example 51 | OK | 0.44 | 100.20 | 83.7 | 5.07 | 14.0 |
| Reference Example 9 | NG | 1.33 | 98.1 | - | - | - |

As shown in Table 10, Examples 42 to 51 in which holes were formed at a suitable hole density exhibited excellent capacity retention, excellent swelling characteristics and low resistance at the same loading level. Whereas, if the holes were not formed (Comparative Examples 9, 12, and 15), they exhibited low capacity retention, deteriorated swelling characteristics, and high resistance at the same loading level. Or, Reference Examples 5, 7, and 9 in which the hole was formed too deep even if the holes were formed, exhibited too weak an adherence, causing detachment.

< **Test for modification of hole diameter-using needle punching** >

(Examples 52 to 60 and Reference Examples 10 to 12)

A negative electrode having a negative active material layer and an adhesive layer was prepared by the same

procedure as in Example 9, except that the obtained product was subjected to needle punching to change hole density, hole pitch, hole depth and hole diameter to as shown in Table 11.

Using the negative electrode, the electrolyte, and the separator of Example 9, a rechargeable lithium cell with a current density shown in Table 11 was fabricated by the general method.

The cell characteristics of Examples 52 to 60 and Reference Examples 10 to 12 were measured by the same methods as in Experimental Examples 1 to 5. The results are shown in Table 12. For comparison, the results according to Comparative Examples 9, 12, and 15 are also shown in Table 12.

Table 11

| | Presence of hole or not | Hole density (pt/ $mm^2$) | Hole pitch (μm) | Hole depth (μm) | Hole diameter (μm) | Presence of adhesive layer or not | Current density ($mA/cm^2$) | Loading level ($mg/cm^2$) | Active mass density (g/ $cm^3$) | Active material layer thickness (μm) |
|---|---|---|---|---|---|---|---|---|---|---|
| Comparative Example 9 | No | - | - | - | - | Yes | 3 | 18.0 | 1.53 | 118 |
| Example 52 | Yes | 200 | 71 | 5 | 3 | Yes | 3 | 18.0 | 1.53 | 118 |
| Example 53 | Yes | 200 | 71 | 15 | 10 | Yes | 3 | 18.0 | 1.53 | 118 |
| Example 54 | Yes | 200 | 71 | 20 | 35 | Yes | 3 | 18.0 | 1.53 | 118 |
| Reference Example 10 | Yes | 200 | 71 | 20 | 40 | Yes | 3 | 18.0 | 1.53 | 118 |
| Comparative Example 12 | No | - | - | - | - | Yes | 3.5 | 21.0 | 1.53 | 137 |
| Example 55 | Yes | 200 | 71 | 5 | 3 | Yes | 3.5 | 21.0 | 1.53 | 137 |
| Example 56 | Yes | 200 | 71 | 15 | 10 | Yes | 3.5 | 21.0 | 1.53 | 137 |
| Example 57 | Yes | 200 | 71 | 20 | 30 | Yes | 3.5 | 21.0 | 1.53 | 137 |
| Reference Example 11 | Yes | 200 | 71 | 20 | 40 | Yes | 3.5 | 21.0 | 1.53 | 137 |
| Comparative Example 15 | No | - | - | - | - | Yes | 6.1 | 34.0 | 1.53 | 222 |
| Example 58 | Yes | 200 | 71 | 5 | 3 | Yes | 6.1 | 34.0 | 1.53 | 222 |
| Example 59 | Yes | 200 | 71 | 15 | 10 | Yes | 6.1 | 34.0 | 1.53 | 222 |
| Example 60 | Yes | 200 | 71 | 20 | 35 | Yes | 6.1 | 34.0 | 1.53 | 222 |
| Reference Example 12 | Yes | 200 | 71 | 20 | 40 | Yes | 6.1 | 34.0 | 1.53 | 222 |

Table 12

| | Adherence | | Cell capacity (mAh) | Capacity retention (%) | Swelling (%) | Resistance (Ω) |
|---|---|---|---|---|---|---|
| | Degree of adhesion | Amount of detachment (%) | | | | |
| Comparative Example 9 | OK | 0.43 | 99.6 | 91.8 | 4.30 | 12.1 |
| Example 52 | OK | 0.50 | 100.7 | 95.0 | 3.71 | 12.9 |
| Example 53 | OK | 0.48 | 100.7 | 94.9 | 3.73 | 12.7 |
| Example 54 | OK | 0.41 | 100.1 | 95.2 | 3.69 | 12.1 |
| Reference Example 10 | Detachment | 1.14 | 98.6 | - | - | - |
| Comparative Example 12 | OK | 0.45 | 100.7 | 880.0 | 5.06 | 13.5 |
| Example 55 | OK | 0.48 | 99.9 | 90.4 | 3.14 | 12.7 |
| Example 56 | OK | 0.48 | 99.4 | 90.7 | 3.12 | 12.8 |
| Example 57 | OK | 0.43 | 99.5 | 91.2 | 3.10 | 14.1 |
| Reference Example 11 | Detachment | 1.11 | 99.2 | - | - | - |
| Comparative Example 15 | OK | 0.43 | 100.8 | 80.0 | 5.92 | 12.9 |
| Example 58 | OK | 0.48 | 100.5 | 82.8 | 3.71 | 12.9 |
| Example 59 | OK | 0.45 | 100.9 | 82.7 | 3.73 | 12.7 |
| Example 60 | OK | 0.47 | 99.8 | 83.0 | 3.69 | 12.1 |
| Reference Example 12 | Detachment | 1.26 | 98.9 | - | - | - |

As shown in Table 12, Examples 52 to 60 in which the holes were formed at the desired hole density and the desired hole diameter, exhibited excellent capacity retention, excellent swelling characteristic and low resistance at the same loading level. Whereas, Comparative Examples 9, 12, and 15 in which holes were not performed, exhibited low capacity retention. In addition, even though the holes were formed, Reference Examples 10 to 12 in which holes were formed at too large a hole diameter, had too weak adhesion to occur detachment.

**Claims**

**1.** A negative electrode (20) for a rechargeable lithium battery (100), comprising:

a current collector (5); and
a negative active material layer (3a, 3b) positioned on the current collector (5),
wherein the negative active material layer (3a, 3b) comprises a plurality of holes (7) at a hole density of 90 pt/mm$^2$ or more.

**2.** The negative electrode for the rechargeable lithium battery of claim 1, wherein the hole density is 90 pt/mm$^2$ to 625 pt/mm$^2$.

**3.** The negative electrode for the rechargeable lithium battery of claim 1 or 2, wherein the holes (7) have a depth of 5 μm to 40 μm.

**4.** The negative electrode for the rechargeable lithium battery of claim 3, wherein the holes have a depth of 5 μm to 20 μm.

**5.** The negative electrode for the rechargeable lithium battery of any one of the preceding claims, wherein the negative active material layer (3a, 3b) includes the holes (7) at a pitch of 100 μm or less.

**6.** The negative electrode for the rechargeable lithium battery of claim 5, wherein the negative active material layer (3a, 3b) includes the holes (7) at a pitch of 40 μm to 100 μm.

**7.** The negative electrode for the rechargeable lithium battery of any one of the preceding claims, wherein the negative electrode (20) further includes an adhesive layer including a plurality of holes on the negative active material layer (3a, 3b).

**8.** The negative electrode for the rechargeable lithium battery of claim 7, wherein the adhesive layer has a thickness of 1 μm to 5 μm.

**9.** The negative electrode for the rechargeable lithium battery of claim 7 or 8, wherein the adhesive layer includes a vinyl-based or an acryl-based polymer, polyvinyl alcohol, a fluorine-based polymer, or a combination thereof.

**10.** The negative electrode for the rechargeable lithium battery of any one of the preceding claims, wherein the negative electrode (20) has a loading level of 15 mg/cm$^2$ or more.

**11.** A rechargeable lithium battery (100) comprising:

a negative electrode (20) of any one of claim 1 to claim 10;
a positive electrode (10); and
an electrolyte.

FIG. 1

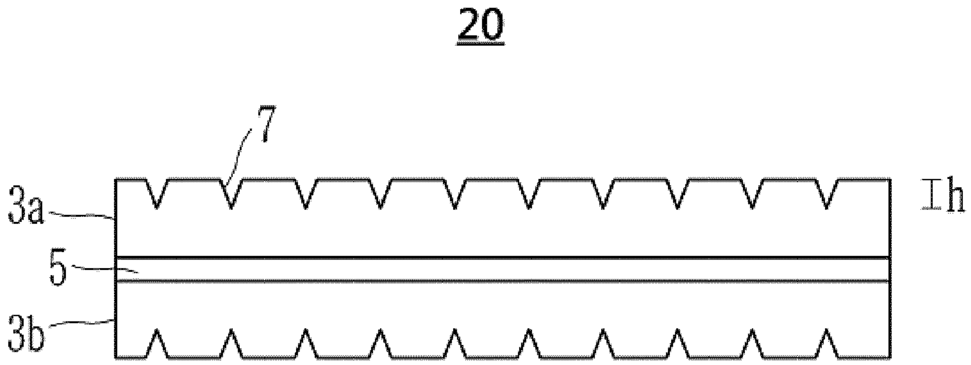

FIG. 2

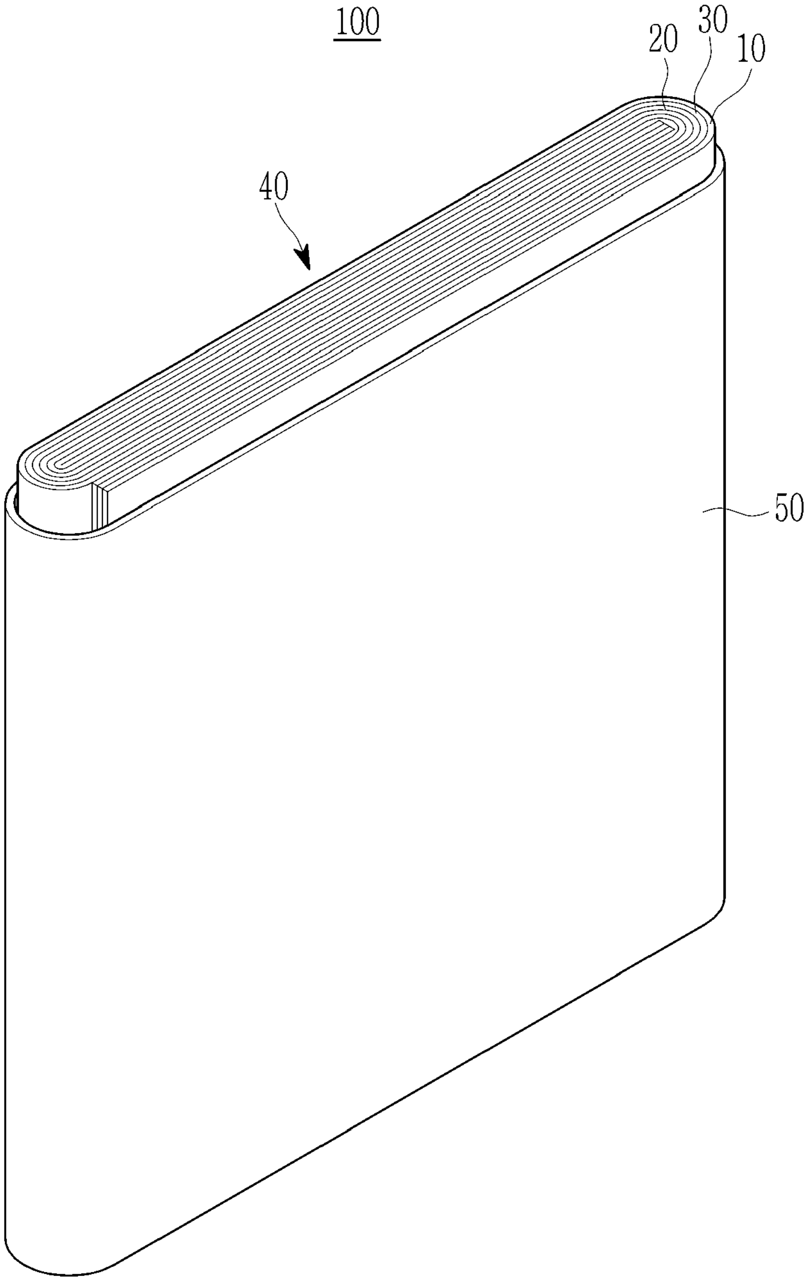

Europäisches Patentamt
European Patent Office
Office européen des brevets

# EUROPEAN SEARCH REPORT

Application Number
EP 23 15 1148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 682 739 B2 (MITSUI MINING & SMELTING CO [JP]) 23 March 2010 (2010-03-23)<br>* example 1 *<br>----- | 1-7,10, 11 | INV.<br>H01M4/36<br>H01M10/052<br>H01M4/02<br>H01M4/04<br>H01M4/13<br>H01M4/139<br>H01M4/66<br>H01M10/0525<br>H01M50/46<br>H01M4/133<br>H01M4/1393 |
| X | EP 3 758 033 A1 (JM ENERGY CORP [JP]) 30 December 2020 (2020-12-30)<br>* tables 1,2 *<br>* example 9 *<br>----- | 1-6 | |
| A | ZHENG GUANGYUAN ET AL: "High-Performance Lithium Metal Negative Electrode with a Soft and Flowable Polymer Coating", ACS ENERGY LETTERS, vol. 1, no. 6, 21 November 2016 (2016-11-21), pages 1247-1255, XP093053233, American Chemical Society ISSN: 2380-8195, DOI: 10.1021/acsenergylett.6b00456<br>* the whole document *<br>----- | 7-11 | |
| | | | TECHNICAL FIELDS SEARCHED (IPC) |
| | | | H01M |

The present search report has been drawn up for all claims

1

| Place of search | Date of completion of the search | Examiner |
|---|---|---|
| Munich | 12 June 2023 | Galbiati, Ivano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 15 1148

This annex lists the patent family members relating to the patent documents cited in the above-mentioned European search report. The members are as contained in the European Patent Office EDP file on
The European Patent Office is in no way liable for these particulars which are merely given for the purpose of information.

12-06-2023

| Patent document cited in search report | | Publication date | Patent family member(s) | Publication date |
|---|---|---|---|---|
| US 7682739 | B2 | 23-03-2010 | NONE | |
| EP 3758033 | A1 | 30-12-2020 | CN 111742385 A | 02-10-2020 |
| | | | EP 3758033 A1 | 30-12-2020 |
| | | | JP WO2019163896 A1 | 04-03-2021 |
| | | | KR 20200124253 A | 02-11-2020 |
| | | | WO 2019163896 A1 | 29-08-2019 |

EPO FORM P0459

For more details about this annex : see Official Journal of the European Patent Office, No. 12/82